# EUROPEAN PATENT APPLICATION

(11) **EP 4 756 553 A1**
(43) Date of publication of application: **10.06.2026**
(21) Application number: 25217829.8
(22) Date of filing: 21.11.2025
(51) Int. Cl.: G05D 1/227, G05D 1/85, G05D 107/70, G05D 105/80, G05D 109/25, G08G 5/22, G08G 5/265, G08G 5/32, G08G 5/53, G08G 5/55, G08G 5/57, G08G 5/59, B64U 10/00, B64U 50/19, B64U 70/92, B64U 80/20, B64U 80/25, G08G 5/54

(54) **RETURN PATH FOR INSPECTION UNMANNED AERIAL VEHICLE, UNMANNED AERIAL VEHICLE AND COMPUTER-READABLE STORAGE MEDIUM**

(30) Priority: 03.12.2024 CN 202411767706
(71) Applicant: Autel Robotics Co., Ltd., Shenzhen, Guangdong 518055 (CN)
(72) Inventor: JING, XueYing, Shenzhen, Guangdong, 518055 (CN)
(74) Representative: Gulde & Partner

(57) **Abstract**

The disclosure relates to unmanned aerial vehicle. During target route inspection with reference objects, the method detects if a preset return condition is met. **If** met, it obtains airspace control points linked to passed reference objects, generates a return path based on these points, and controls the vehicle for return.
This approach enables generating a return path using passed reference objects when needed, thereby reducing the risk of scraping or collision with obstacles during return and enhancing the safety of the unmanned aerial vehicle's return flight.

## Description

### TECHNICAL FIELD

Embodiments of the present disclosure relate to the field of unmanned aerial vehicle technologies, and in particular, to a return method for an unmanned aerial vehicle, an unmanned aerial vehicle, and a computer-readable storage medium.

### BACKGROUND

Unmanned aerial vehicles are unmanned aircraft widely used across diverse fields such as patrol inspection, map data acquisition and stunt cinematography. Unmanned aerial vehicles can be used to perform automated inspection tasks, for example, perform inspection work on power transmission equipment, pipelines, vegetation and coastlines. In related technologies, when an unmanned aerial vehicle cannot continue to perform the inspection task, the unmanned aerial vehicle is controlled to automatically return along a straight line. Because a straight-line return path is typically different from an inspection route of the unmanned aerial vehicle, when the unmanned aerial vehicle returns along a straight line, obstacles are likely present along the straight-line return path, resulting in scraping, collision, and the like of the unmanned aerial vehicle, thereby compromising the flight safety of the unmanned aerial vehicle.

### SUMMARY

An objective of embodiments of the present disclosure is to provide a return method for an unmanned aerial vehicle, an unmanned aerial vehicle, and a computer-readable storage medium, to resolve a technical problem of low return safety of an unmanned aerial vehicle in related technologies.

According to a first aspect, embodiments of the present disclosure provide a return method for an unmanned aerial vehicle, including:
detecting, when the unmanned aerial vehicle inspects a target inspection route, whether the unmanned aerial vehicle meets a preset return condition, the target inspection route including a plurality of reference objects deployed along the route;
obtaining airspace control points if the unmanned aerial vehicle meets the preset return condition, the airspace control points being associated with target objects, and the target objects being reference objects that the unmanned aerial vehicle passes by;
generating a return path based on the airspace control points; and
controlling the unmanned aerial vehicle based on the return path to perform a return operation.

Optionally, the obtaining airspace control points includes:
obtaining object positions and altitudes of the target objects;
determining a return flight plane based on the altitudes of the target objects; and
determining the airspace control points matching the target objects on the return flight plane based on the object positions of the target objects.

In this embodiment, a probability that an obstacle other than the target objects appears in the vicinity of the airspace control points can be reduced, thereby reducing a probability of scraping or collision between the unmanned aerial vehicle and an obstacle in a return process, and improving the safety of a return flight of the unmanned aerial vehicle.

Optionally, the determining a return flight plane based on the altitudes of the target objects includes:
determining a minimum altitude in the altitudes of the target objects; and
determining the return flight plane based on the minimum altitude, an altitude of the return flight plane being greater than or equal to the minimum altitude.

In this embodiment, the altitude of the return flight plane can be controlled, and a probability that an obstacle other than the target objects appears at the altitude of the return flight plane can be reduced, thereby reducing a probability of scraping or collision between the unmanned aerial vehicle and an obstacle in a return process, and improving the safety of the return flight of the unmanned aerial vehicle.

Optionally, the determining the airspace control points matching the target objects on the return flight plane based on the object positions of the target objects includes:
determining, based on the object positions of the target objects, object projection positions of the target objects being orthographically projected onto the return flight plane; and
determining the airspace control points matching the target objects based on the object projection positions.

In this embodiment, the airspace control points can be associated with the target objects that the unmanned aerial vehicle passes by along the target inspection route, so that the return path generated based on the airspace control points is related to the target inspection route, thereby reducing a probability that an obstacle appears in the return path, and improving the safety of the return flight of the unmanned aerial vehicle.

Optionally, the determining the airspace control points matching the target objects based on the object projection positions includes:
creating circular areas on the return flight plane based on a preset safe radius with the object projection positions as centers; and
determining the airspace control points on the circular areas, a flight path obtained by sequentially connecting the airspace control points being a shortest flight path.

In this embodiment, the unmanned aerial vehicle can be enabled to return along the shortest flight path, thereby reducing the time of the return flight of the unmanned aerial vehicle and reducing power consumption.

Optionally, the airspace control points include a return start control point, and the determining the airspace control points on the circular areas includes:
obtaining an initial return position of the unmanned aerial vehicle and a terminal object, the terminal object being a target object that the unmanned aerial vehicle passes by last before returning;
determining an initial projection position of the initial return position being orthographically projected onto the return flight plane, a circular area corresponding to the terminal object being a terminal circular area, and a connection line between the initial projection position and a center of the terminal circular area being a terminal connection line; and
determining an intersection point of the terminal connection line and the terminal circular area as the return start control point.

This embodiment can improve the accuracy of determining the return start control point, thereby improving the precision of the return path and reducing a probability that an obstacle appears on the return path.

Optionally, the airspace control points include a return end control point, and the determining the airspace control points on the circular areas includes:
obtaining a return landing position of the unmanned aerial vehicle and an initial object, the initial object being a target object that the unmanned aerial vehicle passes by first before returning;
determining an endpoint projection position of the return landing position being orthographically projected onto the return flight plane, a circular area corresponding to the initial object being an initial circular area, and a connection line between the endpoint projection position and a center of the initial circular area being an initial connection line; and
determining an intersection point of the initial connection line and the initial circular area as the return end control point.

This embodiment can improve the accuracy of determining the return end control point, thereby improving the precision of the return path and reducing a probability that an obstacle appears on the return path.

Optionally, the airspace control points include a return start control point, a return intermediate control point and a return end control point, and the determining the airspace control points on the circular areas includes:
obtaining an intermediate object, the intermediate object being a target object that the unmanned aerial vehicle passes by before returning and that is deployed between an initial object and a terminal object, the initial object being a target object that the unmanned aerial vehicle passes by first before returning, the terminal object being a target object that the unmanned aerial vehicle passes by last before returning, and a circular area of the intermediate object being an intermediate circular area; and
finding, based on a preset path planning algorithm, a boundary point meeting a preset shortest path condition on a boundary of the intermediate circular area as the return intermediate control point, a flight path obtained by sequentially connecting the return start control point, the return intermediate control point and the return end control point being the shortest flight path.

In this embodiment, the accuracy of determining the return intermediate control point can be improved, so that the return path is the shortest flight path, thereby reducing the time of the return flight of the unmanned aerial vehicle and reducing power consumption.

According to a second aspect, embodiments of the present disclosure provide an unmanned aerial vehicle, including a memory and a processor. The memory is connected to the processor. The processor is configured to execute one or more computer programs stored in the memory. The processor, when executing the one or more computer programs, causes the unmanned aerial vehicle to implement the foregoing return method for an unmanned aerial vehicle.

According to a third aspect, embodiments of the present disclosure provide a computer-readable storage medium. The computer-readable storage medium stores a computer program. The computer program includes program instructions. The program instructions, when executed by a processor, cause the processor to perform the foregoing return method for an unmanned aerial vehicle.

The embodiments of the present disclosure may achieve the following technical effects: In the return method for an unmanned aerial vehicle provided in the embodiments of the present disclosure, when the unmanned aerial vehicle inspects a target inspection route, it is detected whether the unmanned aerial vehicle meets a preset return condition. The target inspection route includes a plurality of reference objects deployed along the route. Airspace control points are obtained if the unmanned aerial vehicle meets the preset return condition. The airspace control points are associated with target objects. The target objects are reference objects that the unmanned aerial vehicle passes by. A return path is generated based on the airspace control points. The unmanned aerial vehicle is controlled based on the return path to perform a return operation. In the embodiments, when the unmanned aerial vehicle needs to return during an inspection, the return path can be generated based on the reference objects that the unmanned aerial vehicle passes by, thereby reducing a probability of scraping or collision between the unmanned aerial vehicle and an obstacle in a return process, and improving the safety of a return flight of the unmanned aerial vehicle.

### BRIEF DESCRIPTION OF THE DRAWINGS

To describe the technical solutions in the embodiments of the present disclosure more clearly, the following briefly introduces the accompanying drawings required for describing the embodiments of the present disclosure. Apparently, the accompanying drawings in the following description show merely some embodiments of the present disclosure, and a person of ordinary skill in the art may still derive other drawings from these accompanying drawings without creative efforts.
FIG. 1 is a schematic diagram of a first application environment according to an embodiment of the present disclosure;
FIG. 2 is a schematic diagram of a second application scenario according to an embodiment of the present disclosure;
FIG. 3 is a schematic flowchart of a return method for an unmanned aerial vehicle according to an embodiment of the present disclosure;
FIG. 4 is a schematic diagram of object projection positions on a return flight plane according to an embodiment of the present disclosure;
FIG. 5 is a schematic diagram of object projection positions on a return flight plane and airspace control points according to an embodiment of the present disclosure;
FIG. 6 is a schematic structural diagram of a return apparatus for an unmanned aerial vehicle according to an embodiment of the present disclosure; and
FIG. 7 is a schematic structural diagram of an unmanned aerial vehicle according to an embodiment of the present disclosure.

### DETAILED DESCRIPTION

To make the objectives, technical solutions, and advantages of the present disclosure more comprehensible, the present disclosure is further described below in detail with reference to the accompanying drawings and embodiments. It should be understood that the specific embodiments described herein are merely used to describe the present disclosure rather than limiting the present disclosure. All other embodiments obtained by a person of ordinary skill in the art based on the embodiments of the present disclosure without creative efforts fall within the scope of protection of the present disclosure.

It should be noted that if no conflict occurs, features in the embodiments of the present disclosure may be combined with each other, and all fall within the scope of protection of the present disclosure. In addition, although the functional module divisions are performed in the device schematic diagrams and the logical sequences are shown in the flowcharts, in some cases it is possible to perform the steps shown or described with a module division different from that in the devices or in an order different from that in the flowcharts. In addition, words such as "first", "second" and "third" used in the present disclosure do not limit data and an execution order, but only distinguish same items or similar items having basically the same functions and effects.

When an unmanned aerial vehicle performs inspection work on power transmission equipment, pipelines, vegetation, coastlines, among other inspection objects, an inspection route passes by a plurality of inspection objects and is typically a curve. In addition, the unmanned aerial vehicle flies at a specified altitude within an applied-for airspace corridor range when inspecting each inspection object. Therefore, the unmanned aerial vehicle can avoid obstacles in the vicinity of the inspection objects when flying along the inspection route. When the unmanned aerial vehicle cannot continue to perform the inspection task at a position due to reasons such as insufficient battery power, the unmanned aerial vehicle needs to return to a takeoff point. In related technologies, when an unmanned aerial vehicle cannot continue to perform the inspection task, the unmanned aerial vehicle is controlled to automatically return along a straight line. That is, the unmanned aerial vehicle is controlled to return to the takeoff point along a straight line between a current position and the takeoff point. Because a straight-line return path is typically different from a curved inspection route, when the unmanned aerial vehicle returns along a straight line, obstacles at various altitudes are likely present along the straight-line return path, resulting in scraping, collision, and the like of the unmanned aerial vehicle, thereby compromising the flight safety of the unmanned aerial vehicle.

Based on this, embodiments of the present disclosure provide a return method for an unmanned aerial vehicle. Airspace control points are associated with reference objects that the unmanned aerial vehicle passes by, and a return path is generated based on the airspace control points, so that a probability of scraping or collision between the unmanned aerial vehicle and an obstacle in a return process can be reduced, thereby improving the safety of a return flight of the unmanned aerial vehicle.

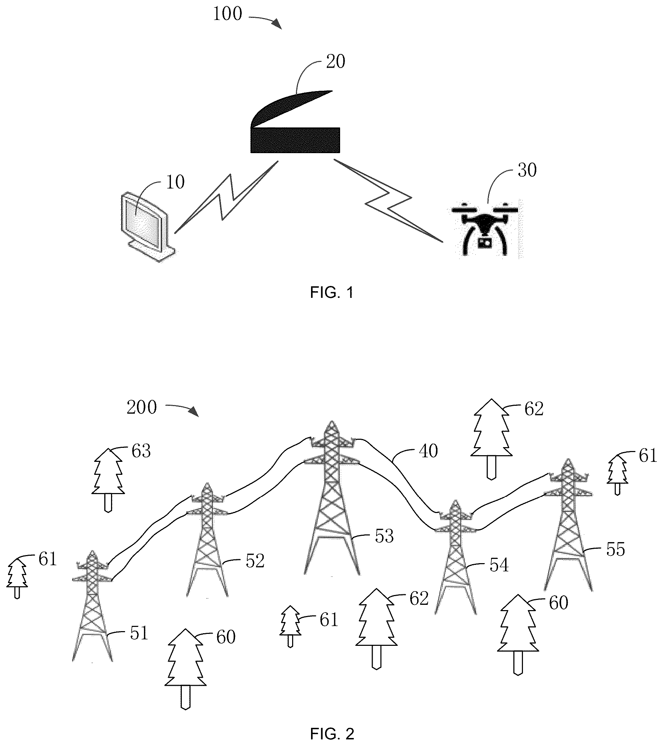

FIG. 1 is a schematic diagram of a first application environment according to an embodiment of the present disclosure. As shown in FIG. 1, an application environment 100 includes a management platform 10, a drone nest 20 and an unmanned aerial vehicle 30. The management platform 10 is communicatively connected to the drone nest 20 by a wired network or a wireless network. The drone nest 20 is communicatively connected to the unmanned aerial vehicle 30 by a wireless network. The wireless network may be a 2G network, a 3G network, a 4G network, a 5G network, a wireless local area network, a Bluetooth network, among other wireless networks, or a combination thereof. The wired network may be a serial cable network, a network cable network, among other wired networks, or a combination thereof. This is not limited herein.

The management platform 10 is a backend monitoring system that uniformly manages the drone nest 20 and the unmanned aerial vehicle 30, and may be any suitable electronic device having a control function, for example, a laptop computer, a desktop computer, or a server cluster.

The management platform 10 is configured to plan a target inspection route for the unmanned aerial vehicle 30. The target inspection route is a flight path for the unmanned aerial vehicle to perform an inspection task. An inspection object in the inspection task may be power transmission equipment, pipelines, roads, vegetation, or the like. The management platform 10 is further configured to determine whether the flight path of the unmanned aerial vehicle 30 requires airspace restrictions. When the flight path of the unmanned aerial vehicle 30 requires airspace restrictions, the unmanned aerial vehicle 30 can fly only within a corresponding airspace corridor range. When the flight path of the unmanned aerial vehicle 30 does not require airspace restrictions, a flight position of the unmanned aerial vehicle 30 in the air is not restricted. The airspace corridor range is a range in which the unmanned aerial vehicle can legally fly in the air. Each unmanned aerial vehicle corresponds to one airspace corridor range. Before the unmanned aerial vehicle flies, a related operator applies for a corresponding airspace corridor range for the unmanned aerial vehicle.

The management platform 10 may include a display, or may be connected to another display device for display. The display may be configured to display various data of the drone nest and/or the unmanned aerial vehicle, for example, display a cover status (open or closed) of the drone nest, the airspace corridor range corresponding to the unmanned aerial vehicle, a flight route of the unmanned aerial vehicle, and a flight video of the unmanned aerial vehicle. The management platform 10 may further include an input apparatus configured to input a control instruction of the related operator and send the control instruction to the drone nest 20. The control instruction is, for example, an inspection task instruction, an unmanned aerial vehicle landing instruction, or an unmanned aerial vehicle return control instruction. The input apparatus is, for example, a touchscreen, a key, or a mouse.

The drone nest 20 is configured to place the unmanned aerial vehicle 30 and can meet takeoff, landing, battery swapping, and charging requirements of the unmanned aerial vehicle 30. The drone nest 20 typically includes a cabinet and a cover. The cabinet and the cover form a closed space. When being placed in the closed space, the unmanned aerial vehicle 30 may be sheltered from the sun and rain. The drone nest 20 may further include a charging module configured to charge the unmanned aerial vehicle when the unmanned aerial vehicle is placed in the drone nest 20.

The drone nest 20 is further configured to receive the control instruction sent by the management platform 10 and control the unmanned aerial vehicle based on the control instruction. For example, when the control instruction is the inspection task instruction, the inspection task instruction includes a target inspection route and an airspace restriction requirement. The drone nest 20 sends the target inspection route and the inspection task execution instruction to the unmanned aerial vehicle 30, so that the unmanned aerial vehicle 30 performs an inspection task based on the target inspection route. The drone nest 20 controls the unmanned aerial vehicle 30 according to the airspace restriction requirement to mark whether the flight path of the unmanned aerial vehicle 30 requires airspace restrictions. When the control instruction is the unmanned aerial vehicle landing instruction, the drone nest 20 sends the control instruction to the unmanned aerial vehicle 30, so that the unmanned aerial vehicle 30 performs landing. When the control instruction is the unmanned aerial vehicle return control instruction, the drone nest 20 sends the control instruction to the unmanned aerial vehicle 30, so that the unmanned aerial vehicle 30 returns.

The unmanned aerial vehicle 30 may be an unmanned aircraft driven by any type of power, and includes, but is not limited to, a tiltrotor unmanned aerial vehicle, a fixed-wing unmanned aerial vehicle, a parafoil unmanned aerial vehicle, a flapping-wing unmanned aerial vehicle, or a helicopter model. The unmanned aerial vehicle 30 may have a corresponding size or power according to requirements of actual cases, to provide a payload capacity, a flight speed, a flight range, and the like that can meet use requirements.

The unmanned aerial vehicle 30 is configured to receive an instruction sent by the drone nest 20 and perform a corresponding action based on the instruction. For example, the inspection task execution instruction sent by the drone nest 20 is received to start to perform an inspection task. Alternatively, the unmanned aerial vehicle landing instruction sent by the drone nest 20 is received to perform landing. Alternatively, the unmanned aerial vehicle return control instruction sent by the drone nest 20 is received to return. The unmanned aerial vehicle 30 is further configured to perform photographing detection on the inspection object in an inspection process and transmit obtained image information or video information to the drone nest 20, so that the drone nest 20 sends the image information or video information to the management platform 10. The inspection object in the inspection task performed by the unmanned aerial vehicle 30 may be power transmission equipment, pipelines, roads, vegetation, or the like.

FIG. 2 is a schematic diagram of a second application scenario according to an embodiment of the present disclosure. FIG. 2 is described by using an example in which the inspection object is a high-voltage transmission line. The high-voltage transmission line includes a plurality of towers supporting transmission cables. As shown in FIG. 2, an application scenario 200 includes transmission cables 40, a tower 51, a tower 52, a tower 53, a tower 54, a tower 55, an obstacle 60, an obstacle 61, an obstacle 62 and an obstacle 63.

Two transmission cables 40 are supported between the tower 51 and the tower 52, between the tower 52 and the tower 53, between the tower 53 and the tower 54 and between the tower 54 and the tower 55. Object positions and altitudes of the towers 51 to 55 are different. The obstacles 60 to 63 are objects that are distributed in the vicinity of the towers 51 to 55, that have different altitudes, and that hinder the flight of the unmanned aerial vehicle. Trees are used as an example in FIG. 2.

The unmanned aerial vehicle performs an inspection task along connection lines between the towers 51 to 55. Each tower may correspond to one observation point. At an observation point, the unmanned aerial vehicle may perform photographic detection on one or more parts (for example, one or more parts of insulators, anti-drop pins, hanging-point bolts, vibration dampers, and the like of the tower) of the tower. When being located between two towers, the unmanned aerial vehicle may perform photographic detection on a plurality of transmission cables. When the unmanned aerial vehicle completes photographic detection on all towers that require inspection, the unmanned aerial vehicle completes the execution of the inspection task.

It should be noted that the foregoing is merely exemplary description by using an example that the inspection object is a high-voltage transmission line and does not constitute any limitation to the inspection object. In some embodiments, the inspection object may alternatively be a road, a factory, a field, a mountain forest, or the like.

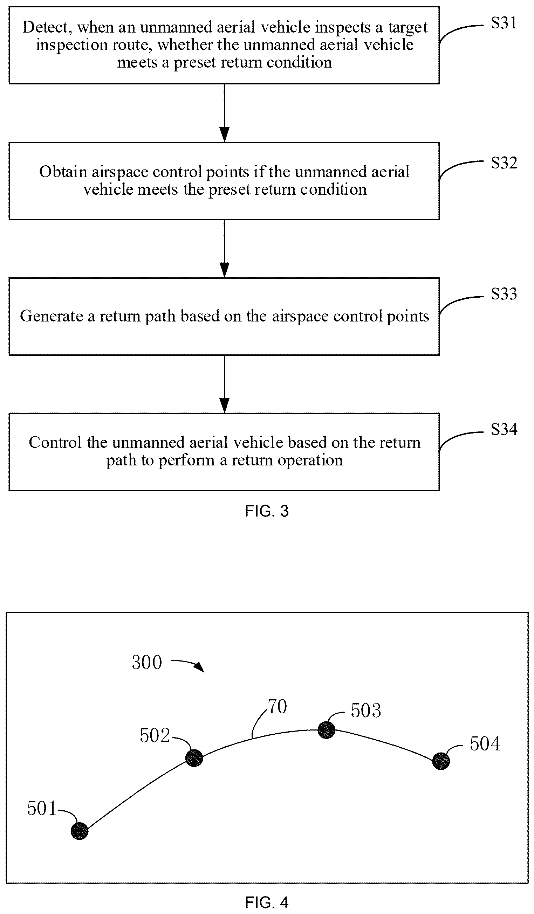

FIG. 3 is a schematic flowchart of a return method for an unmanned aerial vehicle according to an embodiment of the present disclosure.

The return method for an unmanned aerial vehicle is applied to an unmanned aerial vehicle. Specifically, the return method for an unmanned aerial vehicle may be performed by one or more processors of the unmanned aerial vehicle.

As shown in FIG. 3, the return method for an unmanned aerial vehicle includes the following steps.

S31: Detect, when the unmanned aerial vehicle inspects a target inspection route, whether the unmanned aerial vehicle meets a preset return condition.

In this step, the target inspection route includes a plurality of reference objects deployed along the route, and the preset return condition is a condition that needs to be met when the unmanned aerial vehicle performs a return operation.

In some embodiments, the target inspection route is a route along which the unmanned aerial vehicle performs photographic detection on inspection objects in a preset scenario. The reference objects are any objects that have coordinate information and actual heights in the inspection objects. The inspection objects are objects that require detection to determine the presence of potential security risks. The inspection objects include, but are not limited to, objects such as towers supporting transmission cables, roads, factories, fields, and mountain forests. The coordinate information is represented by longitude and latitude, and an object having an actual height is an object that meets a condition that a height difference exists between the highest point of the object and the ground.

When the preset scenario is a power inspection scenario, in some embodiments, the inspection object is a high-voltage transmission line. The high-voltage transmission line includes a plurality of towers supporting transmission cables. The target inspection route is a route along which the unmanned aerial vehicle performs photographic detection on the high-voltage transmission line. The target inspection route includes a plurality of towers that are deployed along the route and that support the transmission cables and the transmission cables between the towers. The reference objects are the towers that support the transmission cables. It may be understood that in the embodiments of the present disclosure, the return method for an unmanned aerial vehicle in the power inspection scenario falls within the scope of protection of the present disclosure, and other inspection scenarios also need to fall within the scope of protection of the present disclosure.

In an example, referring to FIG. 2 again, when the inspection object is the high-voltage transmission line between the tower 51 to the tower 55 shown in FIG. 2, the target inspection route is a line connected along the tower 51, the transmission cables between the tower 51 and the tower 52, the tower 52, the transmission cables between the tower 52 and the tower 53, the tower 53, the transmission cables between the tower 53 and the tower 54, the tower 54, the transmission cables between the tower 54 and the tower 55 and the tower 55. The tower 51, the tower 52, the tower 53, the tower 54 and the tower 55 are all reference objects.

In some embodiments, the preset return condition includes at least one of: the battery level of the unmanned aerial vehicle is less than or equal to a preset battery level, a communication connection between the unmanned aerial vehicle and the drone nest is interrupted, or the unmanned aerial vehicle receives an unmanned aerial vehicle return control instruction sent by the drone nest. The unmanned aerial vehicle return control instruction is configured to indicate the unmanned aerial vehicle to return to a return landing position from a current position. The preset battery level is user-defined by a person skilled in the art based on an inspection scenario and engineering experience, and is not limited herein. It may be understood that in the embodiments of the present disclosure, other cases in which the unmanned aerial vehicle needs to return also fall within the scope of protection of the present disclosure.

In some embodiments, that the unmanned aerial vehicle inspects the target inspection route includes the following steps: flying along the target inspection route, and performing photographic detection on the target inspection route to obtain inspection information. The inspection information is information about the target inspection route photographed by the unmanned aerial vehicle. The inspection information includes image information or video information.

In some embodiments, when the unmanned aerial vehicle inspects the target inspection route, the detecting whether the unmanned aerial vehicle meets a preset return condition includes the following steps: in a process in which the unmanned aerial vehicle flies along the target inspection route and the unmanned aerial vehicle performs photographic detection on the target inspection route, detecting, in real time, whether the battery level of the unmanned aerial vehicle is less than or equal to the preset battery level, whether the communication connection between the unmanned aerial vehicle and the drone nest is interrupted, and whether the unmanned aerial vehicle receives the unmanned aerial vehicle return control instruction sent by the drone nest.

If the battery level of the unmanned aerial vehicle is less than or equal to the preset battery level, or the communication connection between the unmanned aerial vehicle and the drone nest is interrupted, or the unmanned aerial vehicle receives the unmanned aerial vehicle return control instruction sent by the drone nest, the unmanned aerial vehicle meets the preset return condition. If the battery level of the unmanned aerial vehicle is greater than the preset battery level, the communication connection between the unmanned aerial vehicle and the drone nest is not interrupted, and the unmanned aerial vehicle does not receive the unmanned aerial vehicle return control instruction sent by the drone nest, the unmanned aerial vehicle does not meet the preset return condition in this case. The unmanned aerial vehicle continues to inspect the target inspection route, detects, in real time, whether the unmanned aerial vehicle meets the preset return condition, and stops performing step S31 when the unmanned aerial vehicle completes the inspection of the target inspection route or when it is detected that the preset return condition is met.

In some embodiments, before the unmanned aerial vehicle inspects the target inspection route, the return method for an unmanned aerial vehicle further includes the following steps: receiving target inspection route information sent by the drone nest, and starting to fly along the target inspection route in response to an inspection task execution instruction sent by the drone nest to inspect the target inspection route. The target inspection route information includes a path direction and distance information of the target inspection route on a map and coordinates and an altitude of each reference object. The coordinates are represented by longitude and latitude information. The altitude of the reference object is a height difference between the highest point of the reference object and the sea level.

S32: Obtain airspace control points if the unmanned aerial vehicle meets the preset return condition.

In this step, the airspace control points are associated with target objects, and the target objects are reference objects that the unmanned aerial vehicle passes by.

In some embodiments, the target objects are reference objects that the unmanned aerial vehicle has passed by when it is detected that the preset return condition is met during the inspection along the target inspection route.

In an example, referring to FIG. 2, when the unmanned aerial vehicle reaches the tower 52 in the inspection along the tower 51 and the transmission cables between the tower 51 and the tower 52 and it is detected that the preset return condition is met, the target objects are the tower 51 and the tower 52.

In some embodiments, each target object matches one airspace control point. The airspace control point is determined based on an object projection position of the target object being orthographically projected onto a return flight plane. The return flight plane is a horizontal plane. An altitude of the return flight plane is determined based on altitudes of the target objects.

In some embodiments, the airspace control point is the object projection position of the target object being orthographically projected onto the return flight plane.

In some embodiments, a distance between the airspace control point and the object projection position of the target object being orthographically projected onto the return flight plane is less than or equal to a preset safe radius.

In some embodiments, the preset safe radius is a radius length of a circular area that has the target object as a center and that meets a condition that no obstacle exists in the circular area. The preset safe radius is user-defined by a person skilled in the art based on conditions of obstacles in the vicinity of the target object and engineering experience. This is not limited herein.

Within the range of the preset safe radius with the target object as the center, no obstacle hinders the flight of the unmanned aerial vehicle. When the distance between the airspace control point and the object projection position of the target object being orthographically projected onto the return flight plane is less than or equal to the preset safe radius, the present disclosure can enable the airspace control point to be located in the circular area without obstacles, and reduce a probability that an obstacle appears on a return path, thereby reducing a probability of scraping or collision between the unmanned aerial vehicle and an obstacle in a return process, and improving the safety of a return flight of the unmanned aerial vehicle.

In some embodiments, the preset safe radius is a radius length of a circular area that has the target object as a center and that meets a condition that the circular area is located within an applied-for airspace corridor range. The present disclosure can enable the airspace control points to be located within a legal airspace corridor range, so that the return path of the unmanned aerial vehicle is located within the legal airspace corridor range.

S33: Generate a return path based on the airspace control points.

In this step, the return path includes an initial return position, the airspace control points, and the return landing position. The initial return position is a position of the unmanned aerial vehicle when the unmanned aerial vehicle detects that the preset return condition is met. The return landing position is a landing position of the unmanned aerial vehicle.

In some embodiments, the generating a return path based on the airspace control points includes the following steps: using, based on the initial return position, coordinates of the airspace control points, and coordinates of the return landing position, a flight path obtained by sequentially connecting the initial return position, the airspace control points, and the return landing position as the return path.

S34: Control the unmanned aerial vehicle based on the return path to perform a return operation.

In this step, in this embodiment, the unmanned aerial vehicle is controlled to fly from the initial return position to the return landing position along the return path and land at the return landing position.

In some embodiments, the controlling the unmanned aerial vehicle based on the return path to perform a return operation includes the following steps: controlling the unmanned aerial vehicle to fly from the initial return position to the return landing position along the return path at the altitude of the return flight plane and to land at the return landing position.

In some embodiments, the obtaining airspace control points includes the following steps.

S321: Obtain object positions and altitudes of the target objects.

S322: Determine a return flight plane based on the altitudes of the target objects.

S323: Determine the airspace control points matching the target objects on the return flight plane based on the object positions of the target objects.

In S321, the object positions of the target objects include coordinates of the target objects, and the altitudes of the target objects are height differences between the highest points of the target objects and the sea level.

In some embodiments, the obtaining object positions and altitudes of the target objects includes the following steps: receiving the target inspection route information sent by the drone nest, and parsing the target inspection route information to obtain coordinates and an altitude of each reference object; and when the unmanned aerial vehicle performs inspection along the target inspection route and detects that the preset return condition is met, using the coordinates and the altitudes of the reference objects that the unmanned aerial vehicle has passed by as the object positions and the altitudes of the target objects.

In S322, in this embodiment, the altitude of the return flight plane is determined based on the altitudes of the target objects, and the return flight plane is created. The return flight plane is a virtual horizontal plane.

In some embodiments, the altitude of the return flight plane is greater than or equal to a minimum altitude. The minimum altitude is a minimum value of the altitudes in the plurality of target objects.

In some embodiments, the altitude of the return flight plane is greater than or equal to the minimum altitude. The altitude of the return flight plane is less than a maximum altitude. The maximum altitude is a maximum value in the altitudes of the plurality of target objects.

In S323, in this embodiment, based on the coordinates of each target object, the airspace control point matching each target object is determined on the return flight plane.

The return flight plane is determined based on the altitudes of the target objects, and the airspace control points matching the target objects on the return flight plane are determined based on the object positions of the target objects. In this embodiment, a probability that an obstacle other than the target objects appears in the vicinity of the airspace control points can be reduced, thereby reducing a probability of scraping or collision between the unmanned aerial vehicle and an obstacle in a return process, and improving the safety of a return flight of the unmanned aerial vehicle.

In some embodiments, the determining a return flight plane based on the altitudes of the target objects includes the following steps.

S3221: Determine a minimum altitude in the altitudes of the target objects.

S3222: Determine a return flight plane based on the minimum altitude.

In S3221, in this embodiment, a minimum value in the altitudes of the target objects is used as the minimum altitude.

In S3222, in this embodiment, the altitude of the return flight plane is determined based on the minimum altitude, and the return flight plane is created.

In some embodiments, the determining a return flight plane based on the minimum altitude includes the following step: creating the return flight plane. The altitude of the return flight plane is equal to the minimum altitude.

In some embodiments, the determining a return flight plane based on the minimum altitude includes the following steps: determining the maximum altitude in the altitudes of the target objects; calculating an average value of the maximum altitude and the minimum altitude to obtain an average altitude; and creating the return flight plane. The altitude of the return flight plane is equal to the average altitude.

In this embodiment, the altitude of the return flight plane can be controlled, and a probability that an obstacle other than the target objects appears at the altitude of the return flight plane can be reduced, thereby reducing a probability of scraping or collision between the unmanned aerial vehicle and an obstacle in a return process, and improving the safety of the return flight of the unmanned aerial vehicle.

In some embodiments, the determining the airspace control points matching the target objects on the return flight plane based on the object positions of the target objects includes the following steps.

S3231: Determine, based on the object positions of the target objects, object projection positions of the target objects being orthographically projected onto the return flight plane.

S3232: Determine the airspace control points matching the target objects based on the object projection positions.

In S3231, in this embodiment, each target object is orthographically projected onto the return flight plane based on the coordinates of each target object to obtain the object projection position of each target object. Each object projection position corresponds to one coordinate point on the return flight plane.

Refer to FIG. 2 and FIG. 4. FIG. 4 is a schematic diagram of object projection positions on a return flight plane according to an embodiment of the present disclosure. FIG. 4 uses a case in which the target objects are the tower 51, the tower 52, the tower 53 and the tower 54 as an example.

As shown in FIG. 4, a coordinate point 501 is an object projection position of the tower 51 on the return flight plane 300, a coordinate point 502 is an object projection position of the tower 52 on the return flight plane 300, a coordinate point 503 is an object projection position of the tower 53 on the return flight plane 300, and a coordinate point 504 is an object projection position of the tower 54 on the return flight plane 300.

In S3232, in this embodiment, based on the object projection position of each target object on the return flight plane, the airspace control points matching the target objects one by one are determined. In this embodiment, the airspace control points can be associated with the target objects that the unmanned aerial vehicle passes by along the target inspection route, so that the return path generated based on the airspace control points is related to the target inspection route, thereby reducing a probability that an obstacle appears in the return path, and improving the safety of the return flight of the unmanned aerial vehicle.

In some embodiments, the determining the airspace control points matching the target objects based on the object projection positions includes the following steps: using the object projection position of each target object on the return flight plane as the airspace control point matching each target object, and sequentially connecting the airspace control points to obtain a flight path.

Referring to FIG. 4 again, in FIG. 4, the coordinate point 501 is an airspace control point matching the tower 51, the coordinate point 502 is an airspace control point matching the tower 52, the coordinate point 503 is an airspace control point matching the tower 53, and the coordinate point 504 is an airspace control point matching the tower 54. In this case, the coordinate point 501, the coordinate point 502, the coordinate point 503 and the coordinate point 504 are connected sequentially to obtain a flight path 70. The flight path 70 is a flight path used as the return path of the unmanned aerial vehicle.

Compared with an existing solution in which a return along a straight line easily goes beyond an applied-for legal airspace corridor, in this embodiment, the object projection position of each target object on the return flight plane is used as an airspace control point matching each target object, so that during a return, a flight path obtained by sequentially connecting these airspace control points can be used, thereby ensuring that the return path remains within an applied-for legal airspace corridor range.

In some embodiments, the determining the airspace control points matching the target objects based on the object projection positions includes the following steps.

S41: Create circular areas on the return flight plane based on a preset safe radius with the object projection positions as centers.

S42: Determine the airspace control points on the circular areas, a flight path obtained by sequentially connecting the airspace control points being a shortest flight path.

In S41, in this embodiment, on the return flight plane, a circular area corresponding to each object projection position is created with the object projection position as a center and the preset safe radius as a radius. No obstacles other than the target objects exist in the circular areas, and the unmanned aerial vehicle can fly safely in the circular areas.

In S42, in this embodiment, the airspace control points on the circular areas are determined. The flight path obtained by sequentially connecting the airspace control points is the shortest flight path. In this embodiment, the unmanned aerial vehicle can be enabled to return along the shortest flight path, thereby reducing the time of the return flight of the unmanned aerial vehicle and reducing power consumption.

In some embodiments, the airspace control points include a return start control point, and the determining the airspace control points on the circular areas includes the following steps.

S421: Obtain an initial return position of the unmanned aerial vehicle and a terminal object.

S422: Determine an initial projection position of the initial return position being orthographically projected onto the return flight plane.

S423: Determine an intersection point of the terminal connection line and the terminal circular area as the return start control point.

In S421, the terminal object is a target object that the unmanned aerial vehicle passes by last before returning.

In some embodiments, the obtaining an initial return position of the unmanned aerial vehicle includes the following step: when the unmanned aerial vehicle inspects the target inspection route and the unmanned aerial vehicle detects that the preset return condition is met, using a position at which the unmanned aerial vehicle is currently located as the initial return position.

In some embodiments, the obtaining a terminal object includes the following step: using, when the unmanned aerial vehicle inspects the target inspection route and the unmanned aerial vehicle detects that the preset return condition is met, the last target object that the unmanned aerial vehicle already passes by along the target inspection route as the terminal object.

For example, when the unmanned aerial vehicle reaches the tower 52 in the inspection along the tower 51 and the transmission cables between the tower 51 and the tower 52 and it is detected that the preset return condition is met, the target objects are the tower 51 and the tower 52, and the terminal object is the tower 52.

In S422, in this embodiment, the initial return position is orthographically projected onto the return flight plane to obtain the initial projection position. The initial projection position is a projection position of the initial return position on the return flight plane.

In S423, a circular area corresponding to the terminal object is a terminal circular area, and a connection line between the initial projection position and a center of the terminal circular area is a terminal connection line. The return start control point is an airspace control point matching the terminal object on the return flight plane.

The intersection point of the terminal connection line and the terminal circular area is determined as the return start control point. This embodiment can improve the accuracy of determining the return start control point, thereby improving the precision of the return path and reducing a probability that an obstacle appears on the return path.

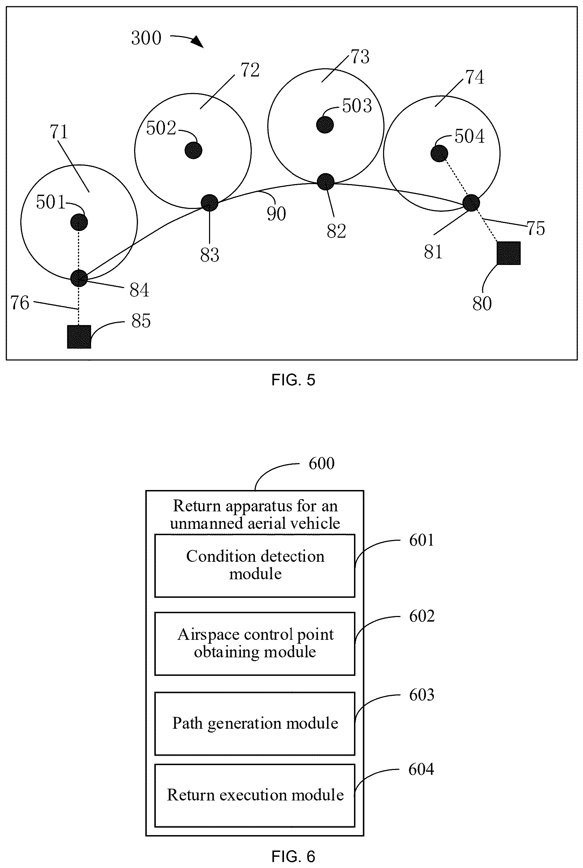

Refer to FIG. 2 and FIG. 5. FIG. 5 is a schematic diagram of object projection positions on a return flight plane and airspace control points according to an embodiment of the present disclosure. FIG. 5 uses a case in which the target objects are the tower 51, the tower 52, the tower 53 and the tower 54 and the terminal object is the tower 54 as an example.

As shown in FIG. 5, the coordinate point 501 is the object projection position of the tower 51 on the return flight plane 300, the coordinate point 502 is the object projection position of the tower 52 on the return flight plane 300, the coordinate point 503 is the object projection position of the tower 53 on the return flight plane 300, and the coordinate point 504 is the object projection position of the tower 54 on the return flight plane 300. A terminal circular area 74 is a circular area with the coordinate point 504 as a center. A connection line between an initial projection position 80 and the center 504 of the terminal circular area 74 is a terminal connection line 75. An intersection point of the terminal connection line 75 and the terminal circular area 74 is a return start control point 81.

In some embodiments, the airspace control points include a return end control point, and the determining the airspace control points on the circular areas includes the following steps.

S424: Obtain a return landing position of the unmanned aerial vehicle and an initial object.

S425: Determine an endpoint projection position of the return landing position being orthographically projected onto the return flight plane.

S426: Determine an intersection point of the initial connection line and the initial circular area as the return end control point.

In S424, the initial object is a target object that the unmanned aerial vehicle passes by first before returning.

In some embodiments, the inspection task instruction includes the coordinates of the return landing position of the unmanned aerial vehicle, and the obtaining a return landing position of the unmanned aerial vehicle includes the following step: parsing the inspection task execution instruction sent by the drone nest to obtain the coordinates of the return landing position

In some embodiments, the unmanned aerial vehicle return control instruction includes the coordinates of the return landing position of the unmanned aerial vehicle, and the obtaining a return landing position of the unmanned aerial vehicle includes the following step: parsing the unmanned aerial vehicle return control instruction sent by the drone nest to obtain the coordinates of the return landing position.

In some embodiments, the obtaining an initial object includes the following step: using, when the unmanned aerial vehicle inspects the target inspection route and the unmanned aerial vehicle detects that the preset return condition is met, the first target object that the unmanned aerial vehicle passes by when starting the inspection along the target inspection route as the initial object.

For example, when the unmanned aerial vehicle reaches the tower 52 in the inspection along the tower 51 and the transmission cables between the tower 51 and the tower 52 and it is detected that the preset return condition is met, the target objects are the tower 51 and the tower 52, and the initial object is the tower 51.

In S425, in this embodiment, the return landing position is orthographically projected onto the return flight plane to obtain the endpoint projection position. The endpoint projection position is a projection position of the return landing position on the return flight plane.

In S426, a circular area corresponding to the initial object is an initial circular area, and a connection line between the endpoint projection position and a center of the initial circular area being an initial connection line. The return end control point is an airspace control point matching the initial object on a return flight plane.

The intersection point of the initial connection line and the initial circular area is determined as the return end control point. This embodiment can improve the accuracy of determining the return end control point, thereby improving the precision of the return path and reducing a probability that an obstacle appears on the return path.

Referring to FIG. 5 again, when the tower 51 is the initial object, an initial circular area 71 is a circular area with the coordinate point 501 as a center. A connection line between an endpoint projection position 85 and the center 501 of the initial circular area 71 is an initial connection line 76. An intersection point of the initial connection line 76 and the initial circular area 71 is a return end control point 84.

In some embodiments, the airspace control points include a return start control point, a return intermediate control point and a return end control point, and the determining the airspace control points on the circular areas includes the following steps.

S427: Obtain an intermediate object.

S428: Find, based on a preset path planning algorithm, a boundary point meeting a preset shortest path condition on a boundary of the intermediate circular area as the return intermediate control point.

In S427, the intermediate object being a target object that the unmanned aerial vehicle passes by before returning and that is deployed between an initial object and a terminal object. At least one intermediate object is provided.

In some embodiments, the obtaining an intermediate object includes the following step: using, in the target objects that the unmanned aerial vehicle passes by along the target inspection route, a target object deployed between the initial object and the terminal object as the intermediate object.

For example, when the unmanned aerial vehicle reaches the tower 53 in the inspection along the tower 51, the transmission cables between the tower 51 and the tower 52, the tower 52, and the transmission cables between the tower 52 and the tower 53 and it is detected that the preset return condition is met, the target objects are the tower 51, the tower 52, and the tower 53, the initial object is the tower 51, the terminal object is the tower 53, and the intermediate object is the tower 52.

In S428, a circular area of the intermediate object is the intermediate circular area, and a flight path obtained by sequentially connecting the return start control point, the return intermediate control point and the return end control point is the shortest flight path.

The preset shortest path condition is that a connection line obtained by sequentially connecting the return start control point, boundary points on the intermediate circular area and the return end control point is the shortest. The preset path planning algorithm is used for finding the boundary of the intermediate circular area for the boundary point meeting the preset shortest path condition.

The preset path planning algorithm includes, but is not limited to, a Depth First Search (DFS) algorithm and a Breadth First Search (BFS) algorithm. The preset path planning algorithm is set by a person skilled in the art based on the target objects, and is not limited herein.

The Depth First Search algorithm is an algorithm for traversing or searching graphs or trees, which starts from a starting node, explores as far as possible along one path, and then tracks back to a previous node to continue exploring.

The Breadth First Search algorithm uses a queue as its core, the search core of which is starting from a starting node, identifying immediately reachable and valid nodes, adding these nodes to the queue, then dequeuing the starting node, and sequentially performing a search operation on the nodes in the queue until the queue is empty.

In some embodiments, the finding, based on a preset path planning algorithm, a boundary point meeting a preset shortest path condition on a boundary of the intermediate circular area includes the following steps: establishing a coordinate system on the return flight plane based on coordinate points of a plurality of object projection positions, performing grid partitioning on the return flight plane based on the coordinate system to obtain a plurality of grid cells, each grid cell corresponding to grid coordinates, and the grid coordinates being used for representing a row number and a column number of one grid cell in the return flight plane; and searching for the boundary point on the boundary of each intermediate circular area based on grid coordinates of the return start control point and grid coordinates of the return end control point, so that a connection line obtained by sequentially connecting the return start control point, the boundary point on each intermediate circular area and the return end control point is the shortest; and using each boundary point as a return intermediate control point matching the corresponding intermediate object.

The boundary point meeting the preset shortest path condition on the boundary of the intermediate circular area is found as the return intermediate control point. The flight path obtained by sequentially connecting the return start control point, the return intermediate control point and the return end control point being the shortest flight path. In this embodiment, the accuracy of determining the return intermediate control point can be improved, so that the return path is the shortest flight path, thereby reducing the time of the return flight of the unmanned aerial vehicle and reducing power consumption.

Referring to FIG. 5 again, when the tower 52 and the tower 53 are intermediate objects, an intermediate circular area 72 is a circular area with the coordinate point 502 as a center, and an intermediate circular area 73 is a circular area with the coordinate point 503 as a center. A boundary point 82 is found on a boundary of the intermediate circular area 73, and a boundary point 83 is found on a boundary of the intermediate circular area 72. The return start control point 81, the boundary point 82, the boundary point 83, and the return end control point 84 are connected sequentially to obtain the shortest connection line. In this case, the boundary point 82 is a return intermediate control point matching the tower 53, and the boundary point 83 is a return intermediate control point matching the tower 52. The return start control point 81, the boundary point 82, the boundary point 83, and the return end control point 84 are connected sequentially to obtain a flight path 90. The flight path 90 is a flight path used as the return path of the unmanned aerial vehicle.

It should be noted that in the foregoing implementations, there is not necessarily a particular sequence between the foregoing steps. A person of ordinary skill in the art may understand based on the descriptions of the implementations of the present disclosure that, in different implementations, the foregoing steps may be performed in different sequences, that is, the steps may be performed in parallel, or may be performed in exchange, or the like.

As another aspect of the embodiments of the present disclosure, the embodiments of the present disclosure provide a return apparatus for an unmanned aerial vehicle. The return apparatus for an unmanned aerial vehicle may be a software module. The software module includes a plurality of instructions that are stored in a memory. A processor may access the memory and call the instructions for execution to complete the return method for an unmanned aerial vehicle described in the foregoing implementations.

In some implementations, the return apparatus for an unmanned aerial vehicle may alternatively be built by using hardware devices. For example, the return apparatus for an unmanned aerial vehicle may be built by using one or more chips. The chips may work in coordination with each other to complete the return method for an unmanned aerial vehicle described in the foregoing implementations. For another example, the return apparatus for an unmanned aerial vehicle may be further built by using various logic devices, for example, a general purpose processor, a digital signal processor (DSP), an application-specific integrated circuit (ASIC), a field-programmable gate array (FPGA), a microcontroller, an Acorn RISC machine (ARM), or another programmable logic device, a discrete gate or transistor logic, a discrete hardware component, or any combination of these parts.

FIG. 6 is a schematic structural diagram of a return apparatus for an unmanned aerial vehicle according to an embodiment of the present disclosure. A return apparatus 600 for an unmanned aerial vehicle includes a condition detection module 601, an airspace control point obtaining module 602, a path generation module 603 and a return execution module 604.

The condition detection module 601 is configured to detect, when the unmanned aerial vehicle inspects a target inspection route, whether the unmanned aerial vehicle meets a preset return condition, the target inspection route including a plurality of reference objects deployed along the route. The airspace control point obtaining module 602 is configured to obtain airspace control points if the unmanned aerial vehicle meets the preset return condition, the airspace control points being associated with target objects, and the target objects being reference objects that the unmanned aerial vehicle passes by. The path generation module 603 is configured to generate a return path based on the airspace control points. The return execution module 604 is configured to control the unmanned aerial vehicle based on the return path to perform a return operation. In the embodiments, when the unmanned aerial vehicle needs to return during an inspection, the return path can be generated based on the reference objects that the unmanned aerial vehicle passes by, thereby reducing a probability of scraping or collision between the unmanned aerial vehicle and an obstacle in a return process, and improving the safety of a return flight of the unmanned aerial vehicle.

In some embodiments, the airspace control point obtaining module 602 is further configured to: obtain object positions and altitudes of the target objects; determine a return flight plane based on the altitudes of the target objects; and determine the airspace control points matching the target objects on the return flight plane based on the object positions of the target objects.

In some embodiments, the airspace control point obtaining module 602 is further configured to: determine a minimum altitude in the altitudes of the target objects; and determine the return flight plane based on the minimum altitude, an altitude of the return flight plane being greater than or equal to the minimum altitude.

In some embodiments, the airspace control point obtaining module 602 is further configured to: determine, based on the object positions of the target objects, object projection positions of the target objects being orthographically projected onto the return flight plane; and determine the airspace control points matching the target objects based on the object projection positions.

In some embodiments, the airspace control point obtaining module 602 is further configured to: create circular areas on the return flight plane based on a preset safe radius with the object projection positions as centers; and determine the airspace control points on the circular areas, a flight path obtained by sequentially connecting the airspace control points being a shortest flight path.

In some embodiments, the airspace control points include a return start control point, and the airspace control point obtaining module 702 is further configured to: obtain an initial return position of the unmanned aerial vehicle and a terminal object, the terminal object being a target object that the unmanned aerial vehicle passes by last before returning; determine an initial projection position of the initial return position being orthographically projected onto the return flight plane, a circular area corresponding to the terminal object being a terminal circular area, and a connection line between the initial projection position and a center of the terminal circular area being a terminal connection line; and determine an intersection point of the terminal connection line and the terminal circular area as the return start control point.

In some embodiments, the airspace control points include a return end control point, and the airspace control point obtaining module 602 is further configured to: obtain a return landing position of the unmanned aerial vehicle and an initial object, the initial object being a target object that the unmanned aerial vehicle passes by first before returning; determine an endpoint projection position of the return landing position being orthographically projected onto the return flight plane, a circular area corresponding to the initial object being an initial circular area, and a connection line between the endpoint projection position and a center of the initial circular area being an initial connection line; and determine an intersection point of the initial connection line and the initial circular area as the return end control point.

In some embodiments, the airspace control points include a return start control point, a return intermediate control point and a return end control point, and the airspace control point obtaining module 602 is further configured to: obtain an intermediate object, the intermediate object being a target object that the unmanned aerial vehicle passes by before returning and that is deployed between an initial object and a terminal object, the initial object being a target object that the unmanned aerial vehicle passes by first before returning, the terminal object being a target object that the unmanned aerial vehicle passes by last before returning, and a circular area of the intermediate object being an intermediate circular area; and find, based on a preset path planning algorithm, a boundary point meeting a preset shortest path condition on a boundary of the intermediate circular area as the return intermediate control point, a flight path obtained by sequentially connecting the return start control point, the return intermediate control point and the return end control point being the shortest flight path.

It should be noted that the foregoing return apparatus for an unmanned aerial vehicle may perform the return method for an unmanned aerial vehicle provided in the implementations of the present disclosure, and has corresponding functional modules and beneficial effects for performing the method. For technical details that are not elaborated in the implementations of the return apparatus for an unmanned aerial vehicle, refer to the return method for an unmanned aerial vehicle provided in the implementations of the present disclosure.

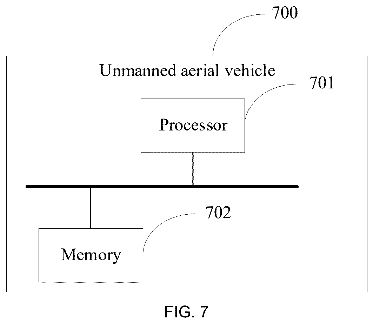

FIG. 7 is a schematic structural diagram of an unmanned aerial vehicle according to an embodiment of the present disclosure. An unmanned aerial vehicle 700 includes one or more processors 701 and a memory 702. The memory 702 is connected to the one or more processors 701, for example, is connected to the processor 701 by a bus.

The processor 701 is configured to support the unmanned aerial vehicle 700 in performing corresponding functions in the methods in the foregoing method embodiments. The processor 701 may be a central processing unit (CPU), a network processor (NP), a hardware chip, or any combination thereof. The hardware chip may be an application-specific integrated circuit (ASIC), a programmable logic device (PLD), or a combination thereof. The PLD may be a complex programmable logic device (CPLD), a field-programmable logic gate array (FPGA), a generic array logic (GAL), or any combination thereof.

The memory 702 is configured to store program code and the like. The memory 702 may include a volatile memory, for example, a random access memory (RAM). The memory may include a non-volatile memory, for example, a read-only memory (ROM), a flash memory, a hard disk drive (HDD), or a solid-state drive (SSD). The memory 702 may further include a combination of the foregoing types of memories.

The memory 702 may be configured to store non-volatile software programs, non-volatile computer-executable programs, and modules, for example, program instructions/modules corresponding to the return method for an unmanned aerial vehicle in the embodiments of the present disclosure. The processor 701 runs the non-volatile software program, instructions, and module stored in the memory 702 to perform various functional applications and data processing of the return method for an unmanned aerial vehicle and the return apparatus for an unmanned aerial vehicle, that is, implement the functions of modules or units of the return method for an unmanned aerial vehicle provided in the foregoing method embodiments and the return apparatus for an unmanned aerial vehicle.

The memory 702 may include a program storage area and a data storage area. The program storage area may store an operating system and an application required for at least one function. The data storage area may store data created according to the use of the return apparatus for an unmanned aerial vehicle and the like. In some embodiments, the memory 702 optionally includes memories disposed remotely with respect to the processor. These remote memories may be connected to the return apparatus for an unmanned aerial vehicle by a network. An example of the foregoing network includes, but not limited to, the internet, an intranet, a local area network, a mobile communication network, and a combination thereof.

The one or more modules are stored in the memory, and when being executed by the one or more processors, perform the return method for an unmanned aerial vehicle in any of the foregoing method embodiments, for example, perform method steps described in the foregoing method embodiments, to implement the functions of the modules described in the foregoing apparatus embodiments.

Embodiments of the present disclosure further provide a computer-readable storage medium. The computer-readable storage medium stores a computer program. The computer program includes program instructions. The program instructions, when executed by a computer, cause the computer to perform the methods in the foregoing embodiments.

A person of ordinary skill in the art may understand that all or a part of the procedures in the methods of the embodiments may be implemented by a computer program instructing relevant hardware. The program may be stored in a computer-readable storage medium. The program is executed to perform the procedures in the foregoing embodiments of the methods. The storage medium may be a magnetic disk, an optical disc, a read-only memory (ROM), a random access memory (RAM), or the like.

What is disclosed above is merely preferred embodiments of the present disclosure, and certainly is not intended to limit the scope of protection of the present disclosure. Therefore, equivalent changes made based on the claims of the present disclosure shall fall within the scope of the present disclosure.

## Claims

1. A return method for an unmanned aerial vehicle, **characterized by** comprising:
detecting, when the unmanned aerial vehicle inspects a target inspection route, whether the unmanned aerial vehicle meets a preset return condition, the target inspection route comprising a plurality of reference objects deployed along the route;
obtaining airspace control points if the unmanned aerial vehicle meets the preset return condition, the airspace control points being associated with target objects, and the target objects being reference objects that the unmanned aerial vehicle passes by;
generating a return path based on the airspace control points; and
controlling the unmanned aerial vehicle based on the return path to perform a return operation.

2. The return method according to claim 1, **characterized in that** the obtaining airspace control points comprises:
obtaining object positions and altitudes of the target objects;
determining a return flight plane based on the altitudes of the target objects; and
determining the airspace control points matching the target objects on the return flight plane based on the object positions of the target objects.

3. The return method according to claim 2, **characterized in that** the determining a return flight plane based on the altitudes of the target objects comprises:
determining a minimum altitude in the altitudes of the target objects; and
determining the return flight plane based on the minimum altitude, an altitude of the return flight plane being greater than or equal to the minimum altitude.

4. The return method according to claim 2, **characterized in that** the determining the airspace control points matching the target objects on the return flight plane based on the object positions of the target objects comprises:
determining, based on the object positions of the target objects, object projection positions of the target objects being orthographically projected onto the return flight plane; and
determining the airspace control points matching the target objects based on the object projection positions.

5. The return method according to claim 4, **characterized in that** the determining the airspace control points matching the target objects based on the object projection positions comprises:
creating circular areas on the return flight plane based on a preset safe radius with the object projection positions as centers; and
determining the airspace control points on the circular areas, a flight path obtained by sequentially connecting the airspace control points being a shortest flight path.

6. The return method according to claim 5, **characterized in that** the airspace control points comprise a return start control point, and the determining the airspace control points on the circular areas comprises:
obtaining an initial return position of the unmanned aerial vehicle and a terminal object, the terminal object being a target object that the unmanned aerial vehicle passes by last before returning;
determining an initial projection position of the initial return position being orthographically projected onto the return flight plane, a circular area corresponding to the terminal object being a terminal circular area, and a connection line between the initial projection position and a center of the terminal circular area being a terminal connection line; and
determining an intersection point of the terminal connection line and the terminal circular area as the return start control point.

7. The return method according to claim 5, **characterized in that** the airspace control points comprise a return end control point, and the determining the airspace control points on the circular areas comprises:
obtaining a return landing position of the unmanned aerial vehicle and an initial object, the initial object being a target object that the unmanned aerial vehicle passes by first before returning;
determining an endpoint projection position of the return landing position being orthographically projected onto the return flight plane, a circular area corresponding to the initial object being an initial circular area, and a connection line between the endpoint projection position and a center of the initial circular area being an initial connection line; and
determining an intersection point of the initial connection line and the initial circular area as the return end control point.

8. The return method according to claim 5, **characterized in that** the airspace control points comprise a return start control point, a return intermediate control point and a return end control point, and the determining the airspace control points on the circular areas comprises:
obtaining an intermediate object, the intermediate object being a target object that the unmanned aerial vehicle passes by before returning and that is deployed between an initial object and a terminal object, the initial object being a target object that the unmanned aerial vehicle passes by first before returning, the terminal object being a target object that the unmanned aerial vehicle passes by last before returning, and a circular area of the intermediate object being an intermediate circular area; and
finding, based on a preset path planning algorithm, a boundary point meeting a preset shortest path condition on a boundary of the intermediate circular area as the return intermediate control point, a flight path obtained by sequentially connecting the return start control point, the return intermediate control point and the return end control point being the shortest flight path.

9. An unmanned aerial vehicle, **characterized by** comprising a memory and a processor, the memory being connected to the processor, the processor being configured to execute one or more computer programs stored in the memory, and the processor, when executing the one or more computer programs, causing the unmanned aerial vehicle to implement the return method for an unmanned aerial vehicle according to any of claims 1 to 8.

10. A computer-readable storage medium, **characterized by** storing a computer program, the computer program comprising program instructions, and the program instructions, when executed by a processor, causing the processor to perform the return method for an unmanned aerial vehicle according to any of claims 1 to 9.
